# EUROPEAN PATENT SPECIFICATION

(11) **EP 1 538 821 B1**
(45) Date of publication and mention of the grant of the patent: **22.08.2007**
(21) Application number: 03388082.4
(22) Date of filing: 01.12.2003
(51) Int. Cl.: H04N 1/21

(54) **Camera for recording of an image sequence**
Kamera zur Aufnahme einer Bildsequenz
Caméra pour enregistrement d'une séquence d'images

(43) Date of publication of application: 08.06.2005
(73) Proprietor: Sony Ericsson Mobile Communications AB, 221 88 Lund (SE)
(72) Inventor: Gulliksson, Johan, 237 36 Bjärred (SE); Lechner, Thomas, 85551 Kirchheim (DE)
(74) Representative: Boesen, Johnny Peder

(56) References cited:
- EP-A- 0 859 511
- EP-A- 0 984 614
- US-A- 5 751 350
- US-A1- 2002 001 035

## Description

### Technical field of the invention:

This invention relates to a camera with activation means for initiating taking and storage of a picture in a first storage means upon activation of the activation means, which camera is arranged to furthermore store a first plurality of pictures in a second storage means upon activation of the activation means, where the camera further comprises display means for displaying pictures stored in the first storage means.

### Description of related art:

With prevalent cameras it is a well known problem that it can be difficult to capture the best moment for a picture or photograph. For example, persons might close their eyes in the moment the picture is taken or show a disadvantageous face. In photographing moving persons or items, such as a baseball or tennis player hitting the ball, it is difficult to photograph the exact event. To alleviate this problem, some cameras provide the possibility of taking a sequence of photographs as separate pictures. An activation of an activation means, e.g. holding down a button, will trigger a sequence of pictures being taken, which is called "burst shooting". In digital cameras, unwanted pictures might thereafter be deleted.

However, it is a problem that only photographs taken after the button was pressed is stored; if the moment to be photographed took place just before the button was actually pressed, no photographs will have been taken at the desired moment. It is also a problem that the user has to manually delete every picture taken, which he/she doesn't want to keep, in that this can be rather time consuming and cumbersome.

EP 0 984 614 A2 describes a camera with an activation means (shutter button) which allows the user to select one or more pictures for storage in the permanent memory of the device, said one or more pictures being chosen from a set of pictures taken automatically by the camera and displayed as an automatic slideshow in the display of the camera.

### Summary of the invention:

These problems are remedied when the camera of the kind mentioned in the introductory is arranged to take and store a first plurality of pictures in the second storage means substantially continuously, independently of and before activation of the activation means, and that the camera is arranged to, upon activation of the activation means, furthermore take and store a second plurality of pictures in the second storage means.

Hereby, the camera provides a user with two pluralities of pictures in excess of the picture taken (and stored in the first storage means) upon activation of the activation means: a first plurality of pictures taken before the activation of the activation means and a second plurality taken after activation of the activation means. To a user, these pluralities of pictures occur as one plurality of pictures, whereof some are taken before the activation of the activation means, and others are taken thereafter, in excess of the actual picture taken at the time of activation of the activation means.

It should be noted, that term "initiating storage of a picture in a first storage means" could denote the user activated storage of a picture stored firstly in the second storage means. In this case, the camera substantially continuously stores pictures independently of activation of the activation means. When the activation means is activated, the picture taken at that instant as well the second plurality of pictures are stored in the second storage means. Thereafter, three buttons (or directions from a multi-way joystick control means) would give the user the possibility of either a) displaying the picture(s) taken immediately before the time t₀, b) display the picture(s) taken immediately after the time t₀, c) confirm the currently displayed picture and initiate storage of one or more selected pictures into the first storage means.

In a preferred embodiment the first storage means of the camera according to the invention is a non-volatile storage means. Moreover, it is advantageous if the second storage means of the camera according to the invention is a temporary storage means. One preferred example of such a temporary storage means is a buffer storage. Thus, the first storage means could be a non-volatile but erasable and rewritable storage means, such as e.g. flash memory card, a memory stick, an SD card, etc., whilst the second storage means preferably is a volatile memory, such as RAM. Typically, the second storage means is a buffer means using the FIFO principle (First In First Out), such as a circular buffer. Hereby, a continuous stream of pictures can be shifted into the beginning of the buffer, when the buffer is full.

In a preferred embodiment according to the invention the camera comprises means for initiating displaying of pictures stored in the second storage means on the display means. Hereby, a user can review the pictures stored in the first storage means as well as the pictures stored in the second storage means. Preferably, the camera further comprises means for selecting a picture from the second storages means and means for storing the selected picture in the first storage means. Hereby, a user can initiate the displaying of pictures stored in the first storage means. If the user is content with the pictures stored in the first storage means, no action needs to be taken. However, if the user is discontent with the pictures in the first storage means, hen can initiate displaying of pictures stored in the second storage means. If he/she wants to keep one or more pictures stored in the second storage means, he/she selects the respective picture(s) and initiates the storing of the respective picture(s) into the first storage means. This storing typically is a copying of the picture from the second to the first storage means; however, the picture might also be deleted from the second storage means immediately after storing thereof in the first storage means. Hereby, a user experiences the possibility of going back and/or ahead in time in relation to pictures taken before/after the moment of activation of the activation means.

Preferably, the camera according to the invention comprises means for a user to set the number of pictures to be stored in the second storage means per time unit, and preferably the camera comprises means for a user to set the total number of pictures in the second plurality of pictures. Hereby, the user can adjust the buffered time interval according to his/her needs or wishes. The term "the buffered time interval" is meant to denote the time interval within which pictures are stored in the second storage means. Typically, this buffered time interval is a number of milliseconds, seconds or even minutes. The number of pictures which can be stored per time interval can be almost any number; however, typically between 1 and 50 pictures per second are stored in the second storage means.

Preferably, the camera comprises means for automatically adjusting the total number of pictures in the second plurality of pictures in dependency of one or more of the following: resolution of pictures, shutter, hardware limits, and memory limits. Hereby, the buffer size is adjusted in accordance with the actual status of the camera. Moreover, it is preferred, that the camera comprises means for a user to set the resolution of pictures to be stored in the first and/or second plurality of pictures.

In a further preferred embodiment, the camera according to the invention comprises means for a user to select a subset of pictures from the second storage means to be stored in the first storage means. Thus, a sequence of pictures can be stored in a user friendly way, i.e. with few interactions; eventually in a special file format.

Preferably, the camera according to the invention comprises a flash which is activated synchronously with the taking of pictures. The flash might e.g. be synchronized with the camera shutter. Hereby, it is every picture is accompanied with a flash, enhancing the possibility of right exposure of the pictures taken.

Preferably, that real time information can be stored with each picture in the second storage means of the camera according the invention has the feature. This information can be displayed together with pictures displayed on the display means of the camera so that a user can see the time at which the displayed picture(s) was (were) taken and the time elapsed between two subsequent pictures in the second storage means.

In yet a preferred embodiment of the camera according to the invention, the camera is integrated in a mobile communications device, e.g. a mobile telephone. Hereby, the mobile communications device can be used to send pictures taken by means of the camera to other devices comprising adequate communications means. Moreover, the display means of the camera and a display means of the communication device might be integrated into one display means.

In an alternative, the camera according to the invention comprises means for establishing a connection to a mobile communication device. Such means could be any cable, plug, connector or other suitable connecting means.

The invention moreover concerns a mobile telephone comprising a camera according to the invention. This provides similar advantages as described above.

Finally, the invention relates to a method of taking pictures with a camera which method comprises taking and storing, substantially continuously, a first plurality of pictures independently of and before activation of an activation means; taking and storing a picture in a first storage means upon activation of the activation means; taking and storing a second plurality of pictures in response to the activation of the activation means; displaying the picture stored in the first storage means on the display means; on user demand, displaying pictures from the first plurality and/or the second plurality of pictures on the display means; providing the user with the possibility to choose a picture in the first or in the second plurality of pictures to be stored in the first storage means; and if the user chooses a picture from the first or the second plurality of pictures to be stored in the first storage means, storing the chosen picture in the first storage means.

A few more preferred embodiments are described in dependent claims.

### Brief description of the drawings:

The invention will be described more fully below in connection with preferred embodiments and with reference to the drawings, in which:
Fig. 1 is a schematic diagram showing those structural elements of a camera 100 which are of relevance to the invention;
Fig. 2 is a schematic representation of the indexing of pictures in the buffer means;
Fig. 3 shows pictures displayed on the display means of the camera according to the invention; and
Fig. 4 shows a picture browser displaying one picture and an option menu shown on the display means of the camera according to the invention.

### Detailed description of embodiments:

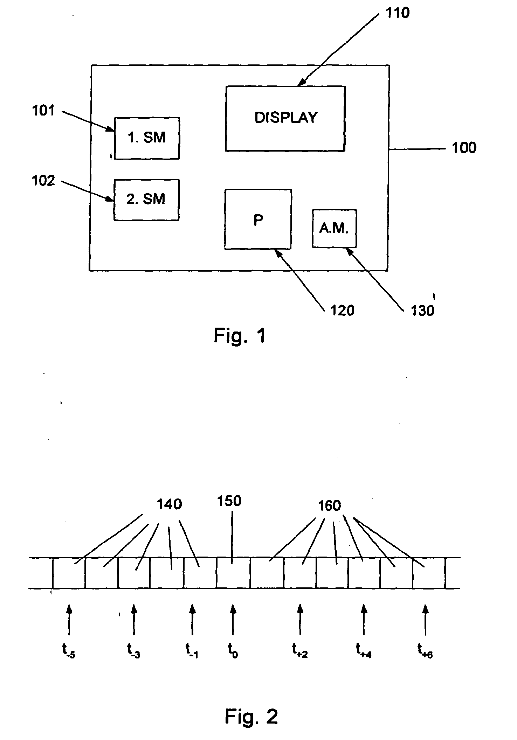

Fig. **1** is a schematic diagram showing those structural elements of a camera 100 which are of relevance to the invention. The camera can be a digital camera or a camcorder. However, it is not precluded that the camera could be a traditional camera with a photographic film as the first storage means and with further storage means for temporary storage of pictures.

The term "digital camera" is meant to cover any camera which records and stores pictures, e.g. photographic images, in digital form that can be fed to a computer as the pictures are recorded or stored in the camera for later loading into a computer or printer. A digital camera has a built-in computer or (micro)processor, and records pictures in an entirely electronic form. Thus the digital camera does not contain a photographic film. The term "traditional camera" is meant to cover any camera storing still pictures onto a photographic film. Both types of cameras can contain a series of lenses that focus light to create a picture of a scene. Whilst a traditional camera focuses this light onto a piece of film, the digital camera focuses it onto a semiconductor device that records light electronically; hereafter the computer or (micro)processor breaks this electronic information down into digital data.

The camera 100 comprises a first storage means 101 and a second storage means 102 as shown in fig. 1. Preferably the first storage means 101 is a non-volatile but erasable and rewritable storage means, such as e.g. flash memory card, whilst the second storage means 102 typically is a buffer storage means, preferably volatile memory, such as RAM.

Moreover, the camera 100 contains an activation means 130, which could be a push-down button, a scrollable button, a touch screen, etc. Further, the camera contains a display 110, e.g. an LCD, for displaying i.a. pictures taken by the camera to the user and a (micro)processor 120 controlling the functions of the camera. The camera moreover comprises elements known to be necessary to make the camera work, but falling beyond the scope of this patent application, such as viewfinder, zoom, shutter, aperture setting, CCD, ADC, etc.

As described above, the camera 100 has activation means 130 for initiating storage of a picture in a first storage means 101 upon activation of the activation means 130 and the camera 100 comprises display means 110 for displaying pictures stored. Furthermore, the camera 100 is arranged to store a first plurality of pictures in a second storage means 102 upon activation of the activation means 130, and the camera is arranged to further store a second plurality of pictures in the second means 102 substantially continuously, independently of activation of the activation means 130. This means, that whenever the camera is turned on so that the view finder is active, pictures are stored in the second storage means 102 as a first plurality of pictures. When the activation means is activated, a second plurality of pictures are stored in addition to the first plurality, so that a number of pictures taken before and after the activation of the activation means are kept in the second storage means.

Moreover, the camera comprises means (not shown) for initiating displaying of pictures from the first or second plurality of pictures, i.e. from the second storage means, on the display means of the camera and means for selecting a picture from the second storage means as well as means for storing the selected picture in the first storage means. Hereby, a user can navigate through the pluralities of pictures taken before and after activation of the activation means and select one or more pictures to be stored in the first storage means.

A user can experience an operation of the camera 100 as follows: when he/she turns on the camera so that the view finder is active, e.g. by activating a button to activate the functions of the camera, the camera 100 begins storing a certain number of pictures with full resolution in a buffer memory, i.e. the second storage means 102. This preferably is a circular buffer memory, so that whenever the buffer memory is full, the oldest pictures are substituted in the memory by recent pictures. By substituting pictures in the buffer memory by newer pictures, excessive filling of the storage means can be avoided. Whenever the user activates the activation means 130, e.g. presses a shutter release button, a picture is taken and stored in the first storage means 101. This picture can be shown to the user on the display 110 of the camera 100, either automatically or by user demand. Such a user demand typically would be an activation of a button or a touch screen. If the user is content with the picture, he/she shouldn't need to do anything; however, the camera might prompt the user to indicate acceptance of the picture or a menu could be displayed on the display 110 with the possibility of entering a mode of reviewing pictures stored in the second storage means 102

However, the camera could also be arranged so that a user, if he/she is discontent with the picture taken at the moment of activation of the activation means, i.e. the picture stored in the first storage means, should prompt, e.g. by pressing a button of the camera 100, the displaying of pictures from the first plurality and/or the second plurality of pictures on the display means 110. Subsequently, pictures from the first and/or second plurality is displayed on the display means 110 of the camera 100 and the user is provided with the possibility to choose a picture in the first or in the second plurality of pictures to be stored in the first storage means. If the user chooses a picture from the first or the second plurality of pictures to be stored in the first storage means, the camera performs the storing of the chosen picture in the first storage means. Typically, the user might only want one picture of the situation, he/she has photographed, but naturally it is preferred that he/she can copy or transfer more than one picture from the second means into the first storage means.

Thus, one of the merits of the invention is that the user experiences a possible "going back in time" in relation to the moment of activation of the activation means: pictures from before (as well as after) the moment of activation of the activation means are stored in the camera and can be shown to the user and be kept.

The camera has connection means and/or transmission means (not shown) arranged to transfer the pictures stored in the first storage means 101 to a computer, a computer server or a printer to facilitate printing out of the pictures, transferral to other computers or computer servers via a computer network such as the Internet, transmitting the pictures over a mobile phone network or WLAN, LAN, etc.

It should be noted, that the term "substantially continuously" is meant to denote "at short time intervals". Such short time intervals could possibly, but not necessarily, be predefined time intervals. The term is meant to cover intervals of a few seconds or less, preferably such that between one and 100 pictures are taken every second. However, the camera can be arranged to let a user to set the number of pictures to be stored in the second storage means per time unit. The extreme points of the user programmed number of pictures to be stored per time unit would normally be 100 pictures per second and one picture every 10 seconds.

The means for initiating displaying (not shown) of pictures on the display of the camera could be a button or a touch screen. The means for letting the user select a picture to be stored could be one or more of the following: a menu shown on the display 110 of the camera 100; displaying pictures on the display 110; a user interface (not shown); means for transferring/copying pictures chosen from the second to the first storage means.

The above description of an embodiment of the invention has been directed to a digital camera; however, as already mentioned, the invention could also be directed to a traditional camera containing a photographic medium, i.e. a film, and comprising further storage means for intermediate storing of pictures taken before and after activation of the activation means. In this case, the camera could be arranged to store a picture at the moment of activation of the activation means in an electronic form to be displayed to the user plus a first plurality of pictures taken after the activation of the activation means and a second plurality of pictures taken before said activation. If the user is not content with the picture taken at the moment of said activation, he/she can access the further pictures in the first and second plurality of pictures. If the user prefers one or more of the pictures in the first and/or second plurality of pictures, he/she can choose to save this picture and get it transferred to the first storage means of the camera, being the photographic film. However, this would require a conversion of information stored in the storage means for intermediate storing of pictures to light information required to be stored in the photographic medium.

Fig. 2 is a schematic representation of the indexing of pictures in the buffer means 102 (fig. 1). The squares 140, 150, 160 indicate the pictures taken before the time of activation of the activation means, at the time of activation of the activation means and after the time of activation of the activation means, respectively. t₀, t_{5,} t_{3,} t₂, etc. denotes instances at which a picture is stored in the second storage means, i.e. the buffer means. The instance t₀ indicates the time of activation of the activation means. The squares 140 to the left of the square 150 represent pictures taken before the activation of the activation means, and the squares 160 to the right of the square 150. When the indexing of the pictures in the second storage means is as shown in fig. 2, user navigation between the pictures can be arranged so that firstly the picture 150 taken at the time of activation of the activation means is displayed. If the user wants more pictures to be displayed he/she can push a button to view the picture taken just before 140; by repeated pushes of the button the older pictures are displayed. By pushing another button (or another part of the same button), pictures taken after the picture 140 can be displayed, so that the pictures closest in time to the picture 140 is shown first. This function of the camera can be organized in a number of ways and the buttons of the camera arranged to navigation through the pictures can be any kind of known buttons or joysticks or corresponding control means.

In fig. 2 the picture taken at t₀ is stored in the buffer means 102 (fig. 1). In this instance, the picture taken at t₀ is not necessarily stored in the first storage means. Thus, when the picture is taken at t₀, it can be displayed from the second storage means. Three buttons (or directions from a multi-way joystick control means) would give the user the possibility of either a) displaying the picture(s) taken immediately before the time t₀, b) display the picture(s) taken immediately after the time t₀, c) confirm the currently displayed picture and initiate storage of one or more selected pictures into the first storage means.

In an alternative (not shown) the picture taken at the time of activation of the activation means, i.e. t₀, might be stored in the first storage means only. Thus the second storage means would only contain pictures taken before and after the activation of the activation means. This is however not important to the function of the camera and the navigation through the pictures is as explained above.

In case the buffer means is a circular buffer, the buffer could for example have space for 50 pictures with indices 0 to 49. The camera would have an index counter and continuously store pictures to the space with the index indicated by the actual value of the counter. After that the index counter is incremented by one. After reaching the full buffer, i.e. "49", the index counter is set back to "0". After activation of the activation means, the value of the counter at the instance of the activation of the activation means would be transferred to a buffer register. The camera would continue to store for instance 25 more pictures after the activation of the activation means, so that the circular buffer contains 25 pictures from before and 25 pictures from after the activation of the activation means, whereof the pictures taken before the activation of the activation means correspond to the first plurality of pictures and the pictures taken after said activation correspond to the second plurality of pictures. The number of pictures in the first and second pluralities need not be equal. The counter value in the buffer register would contain the information of which indices correspond to which pictures as well as where the boundary in the circular buffer between pictures taken before and after activation of the activation means is to be found.

It should be noted, that the camera should be arranged to keep track of the moments of activation of activation means to account for successive activations of the activation means being performed quickly one after another. This is a task of keeping track of which pictures are stored at which moments and keeping the pictures in the second storage means for a certain amount of time, sufficient to facilitate a review by the user.

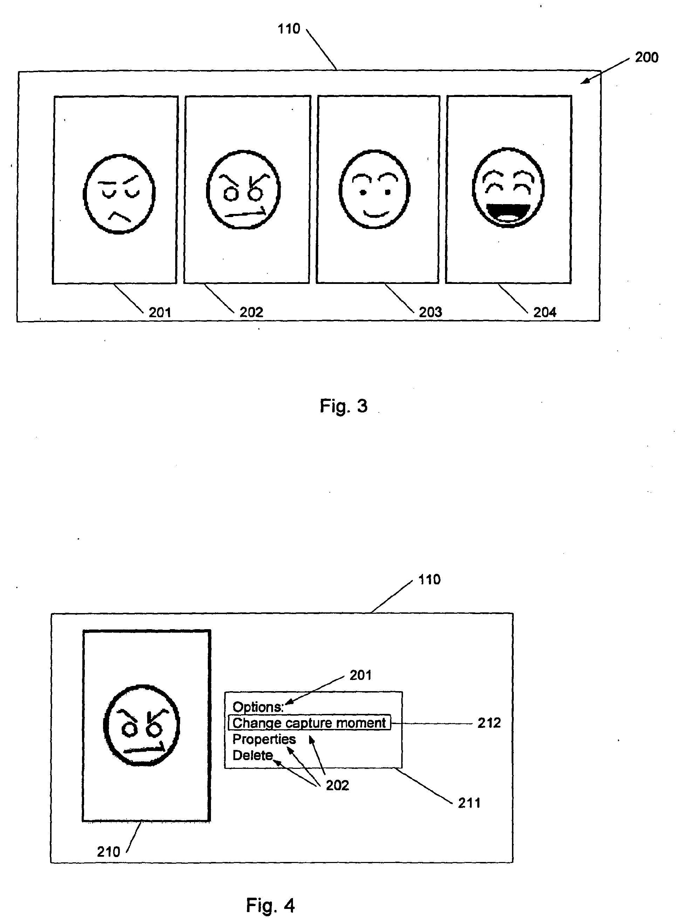

Fig. 3 shows pictures 200 displayed on the display means 110 of the camera 100 according to the invention. In fig. 3 four pictures 201, 202, 203, 204 are shown. The pictures 201, 202, 203, 204 are portrait pictures of a person with four different facial expressions. The number of pictures displayed is only exemplary and can be varied according to the size and shape of the display means 110. The pictures 200 displayed could be pictures from the first plurality of pictures (i.e. taken after activation of the activation means) or from the second plurality of pictures (i.e. taken before activation of the activation means), where both pluralities of pictures are stored in the second storage means. Preferably, it should be possible to display the pictures from the first and second storage means in their natural order of succession. An indication of the moment of activation of the activation means could also be given, e.g. by different colouring of the frames around the pictures, an indicator such as a symbol, e.g. an arrow, "+" , "-", etc., or by including the picture taken at the actual moment of activation of the activation means in a highlighted frame. The user should be able to scroll in the pictures stored in the storage means 101, 102, 103 and see the pictures in their true temporal order of succession.

Fig. 4 shows a picture browser displaying one picture 210 and a picture and an option menu 211 shown on the display means 110 of the camera according to the invention. The layout and content of the option menu 211 is given as a non-limited example only; the option menu can be designed to any appropriate user needs. The option menu 211 contains a head line "Options:" 201 and three lines containing options, viz. "Change capture moment", "Properties", "Delete". These options could be supplemented and/or changed according to the demands to the picture browser. In fig. 4 a frame 212 is shown around the option "Change capture moment", indicating that a user wants to enter this functionality of the camera. According to the invention, if the user activates the option "Change capture moment" 201, an array of pictures, e.g. as shown in fig. 3, is presented to the user and he/she can select the picture he/she prefers. Thus the user can select pictures of what has happened before he/she has pressed the shutter release button of the camera.

As mentioned above, the camera according to the invention can be integrated into a mobile communications device or comprise means for establishing a connection to a mobile communications device. Normally, a mobile communication device contains a display means and in the case of the camera being integrated into a mobile communication device, the display of the mobile communication device and the camera can be shared. Moreover, the mobile communication device can send pictures taken by the camera according to the invention to other devices containing communication means.

## Claims

1. A camera (100) with activation means (130) for initiating taking and storage of a picture in a first storage means (101) upon activation of the activation means (130), where the camera (100) further comprises display means (110) for displaying pictures stored in the first storage means (101), **characterized in that** the camera (100) is arranged to take and store a first plurality of pictures in a second storage means (102) said first plurality of pictures comprising a continuous stream of pictures taken at short time intervals, independently of and before activation of the activation means (130), and that the camera (100) is furthermore arranged to, after and in response to activation of the activation means, taking and storing a second plurality of pictures in the second storage means (102) said second plurality of pictures comprising a continuous stream of pictures taken at short time intervals.

2. A camera (100) according to claim 1, **characterized in that** the first storage means is a non-volatile storage means.

3. A camera (100) according to claim 1 or 2, **characterized in that** the second storage means (103) is a temporary storage means.

4. A camera (100) according to claim 3, **characterized in that** the temporary storage means is a buffer storage.

5. A camera (100) according to any of the claims 1 to 4, **characterized in that** the camera (100) comprises means for initiating displaying of pictures stored in the second storage means (102) on the display means (110).

6. A camera (100) according to any of the claims 1 to 5, **characterized in that** the camera (100) further comprises means for selecting a picture from the second storages means (102) and means for storing the selected picture in the first storage means (101).

7. A camera (100) according to any of the claims 1 to 6, **characterized in** comprising means for a user to set the number of pictures to be stored in the second storage (102) means per time unit.

8. A camera (100) according to any of the claims 1 to 7, **characterized in** comprising means for a user to set the total number of pictures in the second plurality of pictures.

9. A camera (100) according to any of the claims 1 to 7, **characterized in** comprising means for automatically adjusting the total number of pictures in the second plurality of pictures in dependency of one or more of the following: resolution of pictures, shutter, hardware limits, and memory limits.

10. A camera (100) according to any of the claims 1 to 9, **characterized in** comprising means for a user to set the resolution of pictures to be stored in the first and/or second plurality of pictures.

11. A camera (100) according to any of the claims 1 to 10, **characterized in that** the number of pictures in the second plurality of pictures preferably lies between 1 and 500, more preferably between 2 and 250, and most preferably between 2 and 50.

12. A camera (100) according to any of the claims 1 to 11, **characterized in** comprising means for a user to select a subset of pictures from the second storage means (102) to be stored in the first storage means (101).

13. A camera (100) according to any of the claims 1 to 12, **characterized in that** a flash of the camera is activated synchronously with the taking of pictures.

14. A camera (100) according to any of the claims 1 to 13, **characterized in that** real time information is stored with each picture in the second storage means.

15. A camera (100) according to any of the claims 1 to 14, **characterized in that** the camera (100) is integrated in a mobile communications device.

16. A camera (100) according to any of the claims 1 to 15, **characterized in that** the camera (100) comprises means for establishing a connection to a mobile communications device.

17. A mobile telephone comprising a camera (100) according to any of the claims 1 to 16.

18. A method of taking pictures with a camera (100) which method comprises:
taking and storing, one after the other at short time intervals, a first plurality of pictures (140) before and independently of activation of an activation means (130);
taking and storing a picture (150) in a first storage means (101) upon activation of said activation means (130);
taking and storing a second plurality of pictures (160) in response to the activation of the activation means (130), said second plurality of pictures comprising pictures taken one after the other at short time intervals;
displaying the picture stored in the first storage means (101) on the display means (110);
on user demand, displaying pictures from the first plurality and/or the second plurality of pictures on the display means (110);
providing the user with the possibility to choose a picture in the first or in the second plurality of pictures to be stored in the first storage means (101); and
if the user chooses a picture from the first or the second plurality of pictures to be stored in the first storage means (101), storing the chosen picture in the first storage means (101).

## Patentansprüche

1. Kamera (100) mit Auslösemittel (130) zum Initiieren, Nehmen und Speichern eines Bildes in einem ersten Speichermittel (101) nach Auslösen des Auslösemittels (130), wobei die Kamera (100) ferner ein Display (110) zum Anzeigen von Bildern, die in dem ersten Speichermittel (101) gespeichert sind, umfasst, **dadurch gekennzeichnet, dass** die Kamera (100) aufgebaut ist, um eine erste Vielzahl von Bildern in einem zweiten Speichermittel (102) zu speichern, wobei die erste Vielzahl von Bildern eine kontinuierliche Reihe von Bildern umfasst, die in kurzen Zeitintervallen, unabhängig von und vor einem Auslösen des Auslösemittels (130), genommen sind, und dass die Kamera (100) ferner aufgebaut ist, um nach und in Antwort eines Auslösens des Auslösemittels, eine zweite Vielzahl von Bildern zu nehmen und in dem zweiten Speichermittel (102) zu speichern, wobei die zweite Vielzahl von Bildern eine kontinuierliche Reihe von Bildern umfasst, die in kurzen Zeitintervallen genommen sind.

2. Kamera (100) nach Anspruch 1, **dadurch gekennzeichnet, dass** das erste Speichermittel ein nicht-flüchtiges Speichermittel ist.

3. Kamera (100) nach Anspruch 1 oder 2, **dadurch gekennzeichnet, dass** das zweite Speichermittel (103) ein temporäres Speichermittel ist.

4. Kamera (100) nach Anspruch 3, **dadurch gekennzeichnet, dass** das temporäre Speichermittel ein Pufferspeicher ist.

5. Kamera (100) nach einem der Ansprüche 1 bis 4, **dadurch gekennzeichnet, dass** die Kamera (100) Mittel zum Initiieren des Anzeigens von Bildern auf dem Display (110) umfasst, die in dem zweiten Speichermittel (102) gespeichert sind.

6. Kamera (100) nach einem der Ansprüche 1 bis 5, **dadurch gekennzeichnet, dass** die Kamera (100) ferner Mittel zur Auswahl eines Bildes aus dem zweiten Speichermittel (102) und Mittel zum Speichern des ausgewählten Bildes in dem ersten Speichermittel (101) umfasst.

7. Kamera (100) nach einem der Ansprüche 1 bis 6, **dadurch gekennzeichnet, dass** die Kamera für einen Benutzer Mittel zum Einstellen der Anzahl der in das zweite Speichermittel (102) zu speichernden Bilder pro Zeiteinheit umfasst.

8. Kamera (100) nach einem der Ansprüche 1 bis 7, **dadurch gekennzeichnet, dass** die Kamera für einen Benutzer Mittel zum Einstellen der Gesamtanzahl der Bilder in der zweiten Vielzahl von Bildern umfasst.

9. Kamera (100) nach einem der Ansprüche 1 bis 7, **dadurch gekennzeichnet, dass** die Kamera Mittel zum automatischen Anpassen der Gesamtanzahl von Bildern in der zweiten Vielzahl von Bildern in Abhängigkeit von einem oder mehreren der Folgenden umfasst: Auflösung der Bilder, Blende, Hardwarebeschränkungen und Speichergrenzen.

10. Kamera (100) nach einem der Ansprüche 1 bis 9, **dadurch gekennzeichnet, dass** die Kamera für einen Benutzer Mittel zum Einstellen der Auflösung der in der ersten und/oder zweiten Vielzahl von Bildern zu speichernden Bilder umfasst.

11. Kamera (100) nach einem der Ansprüche 1 bis 10, **dadurch gekennzeichnet, dass** die Anzahl der Bilder in der zweiten Vielzahl von Bildern vorzugsweise zwischen 1 und 500, noch bevorzugter zwischen 2 und 250, und noch bevorzugter zwischen 2 und 50 liegt.

12. Kamera (100) nach einem der Ansprüche 1 bis 11, **dadurch gekennzeichnet, dass** die Kamera Mittel für einen Benutzer zur Auswahl einer Untermenge von in das erste Speichermittel (101) zu speichernden Bildern aus dem zweiten Speichermittel (102) umfasst.

13. Kamera (100) nach einem der Ansprüche 1 bis 12, **dadurch gekennzeichnet, dass** ein Blitzlicht der Kamera synchron mit dem Nehmen von Bildern ausgelöst wird.

14. Kamera (100) nach einem der Ansprüche 1 bis 13, **dadurch gekennzeichnet, dass** Echtzeitinformationen mit jedem Bild in dem zweiten Speichermittel gespeichert werden.

15. Kamera (100) nach einem der Ansprüche 1 bis 14, **dadurch gekennzeichnet, dass** die Kamera (100) in einer mobilen Kommunikationsvorrichtung integriert ist.

16. Kamera (100) nach einem der Ansprüche 1 bis 15, **dadurch gekennzeichnet, dass** die Kamera (100) Mittel zum Aufbau einer Verbindung mit einer mobilen Kommunikationsvorrichtung umfasst.

17. Mobiltelefon, umfassend eine Kamera (100) nach einem der Ansprüche 1 bis 16.

18. Verfahren zum Nehmen von Bildern mit einer Kamera (100), wobei das Verfahren umfasst:
Nehmen und Speichern einer ersten Vielzahl von Bildern (140), nacheinander in kurzen Zeitintervallen, vor und unabhängig eines Auslösens eines Auslösemittels (130);
Nehmen und Speichern eines Bildes (150) in einem ersten Speichermittel (101) beim Auslösen des Auslösemittels (130); Nehmen und Speichern einer zweiten Vielzahl von Bildern (160) als Antwort auf das Auslösen des Auslösemittels (130), wobei die zweite Vielzahl von Bildern Bilder umfasst, die nacheinander in kurzen Zeitintervallen genommen werden;
Anzeigen des Bildes, das in dem ersten Speichermittel (101) gespeichert ist, auf dem Display (110) ;
Anzeigen von Bildern aus der ersten Vielzahl und/oder der zweiten Vielzahl von Bildern auf dem Display (110), auf Befehl eines Benutzers;
Vorsehen des Benutzers mit der Möglichkeit, ein in das erste Speichermittel (101) zu speicherndes Bild in der ersten oder in der zweiten Vielzahl von Bildern auszuwählen; und wobei,
wenn der Benutzer ein Bild aus der ersten oder der zweiten Vielzahl von in das erste Speichermittel (101) zu speichernden Bildern auswählt, das ausgewählte Bild in dem ersten Speichermittel (101) gespeichert wird.

## Revendications

1. Caméra (100) dotée d'un moyen (130) d'activation destiné à déclencher une prise ainsi qu'un stockage d'une image dans un premier moyen (101) de stockage lors d'une activation du moyen (130) d'activation, où la caméra (100) comporte de plus un moyen (110) d'affichage destiné à afficher des images stockées dans le premier moyen (101) de stockage,
**caractérisée en ce que** la caméra (100) est agencée pour prendre et stocker une première pluralité d'images dans un deuxième moyen (102) de stockage, ladite première pluralité d'images comportant un flux continu d'images prises avec de courts intervalles de temps, indépendamment de et avant une activation du moyen (130) d'activation, et **en ce que** la caméra (100) est de plus agencée pour prendre et stocker, après et en réponse à une activation du moyen d'activation, une deuxième pluralité d'images dans le deuxième moyen (102) de stockage, ladite deuxième pluralité d'images comportant un flux continu d'images prises avec de courts intervalles de temps.

2. Caméra (100) selon la revendication 1, **caractérisée en ce que** le premier moyen de stockage est un moyen de stockage non volatil.

3. Caméra (100) selon la revendication 1 ou 2, **caractérisée en ce que** le deuxième moyen (103) de stockage est un moyen de stockage temporaire.

4. Caméra (100) selon la revendication 3, **caractérisée en ce que** le moyen de stockage temporaire est un stockage tampon.

5. Caméra (100) selon l'une quelconque des revendications 1 à 4, **caractérisée en ce que** la caméra (100) comporte un moyen pour déclencher un affichage sur le moyen (110) d'affichage d'images stockées dans le deuxième moyen (102) de stockage.

6. Caméra (100) selon l'une quelconque des revendications 1 à 5, **caractérisée en ce que** la caméra (100) comporte de plus un moyen pour sélectionner une image à partir du deuxième moyen (102) de stockage ainsi qu'un moyen pour stocker l'image sélectionnée dans le premier moyen (101) de stockage.

7. Caméra (100) selon l'une quelconque des revendications 1 à 6, **caractérisée en ce qu'**elle comporte un moyen pour un utilisateur d'établir le nombre d'images devant être stockées par unité de temps dans le deuxième moyen (102) de stockage.

8. Caméra (100) selon l'une quelconque des revendications 1 à 7, **caractérisée en ce qu'**elle comporte un moyen pour un utilisateur d'établir le nombre total d'images dans la deuxième pluralité d'images.

9. Caméra (100) selon l'une quelconque des revendications 1 à 7, **caractérisée en ce qu'**elle comporte un moyen pour régler de façon automatique le nombre total d'images dans la deuxième pluralité d'images en fonction de l'un ou plus des éléments suivants : une résolution des images, un obturateur, des limites du matériel et des limites de mémoire.

10. Caméra (100) selon l'une quelconque des revendications 1 à 9, **caractérisée en ce qu'**elle comporte un moyen pour un utilisateur d'établir la résolution des images devant être stockées dans la première et/ou la deuxième pluralité d'images.

11. Caméra (100) selon l'une quelconque des revendications 1 à 10, **caractérisée en ce que** le nombre d'images dans la deuxième pluralité d'images se situe de façon préférable entre 1 et 500, de façon plus préférable entre 2 et 250 et de façon la plus préférable entre 2 et 50.

12. Caméra (100) selon l'une quelconque des revendications 1 à 11, **caractérisée en ce qu'**elle comporte un moyen pour un utilisateur de sélectionner à partir du deuxième moyen (102) de stockage un sous-ensemble d'images devant être stockées dans le premier moyen (101) de stockage.

13. Caméra (100) selon l'une quelconque des revendications 1 à 12, **caractérisée en ce qu'**un flash de la caméra est activé de façon synchrone avec la prise d'images.

14. Caméra (100) selon l'une quelconque des revendications 1 à 13, **caractérisée en ce qu'**une information en temps réel est stockée avec chaque image dans le deuxième moyen de stockage.

15. Caméra (100) selon l'une quelconque des revendications 1 à 14, **caractérisée en ce que** la caméra (100) est intégrée dans un dispositif de communications mobile.

16. Caméra (100) selon l'une quelconque des revendications 1 à 15, **caractérisée en ce que** la caméra (100) comporte un moyen pour établir un raccordement à un dispositif de communications mobile.

17. Téléphone mobile comportant une caméra (100) selon l'une quelconque des revendications 1 à 16.

18. Procédé de prise d'images avec une caméra (100), lequel procédé comportant :
une prise ainsi qu'un stockage, l'une après l'autre avec de courts intervalles de temps, d'une première pluralité d'images (140) avant et indépendamment d'une activation d'un moyen (130) d'activation ;
une prise ainsi qu'un stockage d'une image (150) dans un premier moyen (101) de stockage lors d'une activation dudit moyen (130) d'activation ;
une prise ainsi qu'un stockage d'une deuxième pluralité d'images (160) en réponse à l'activation du moyen (130) d'activation, ladite deuxième pluralité d'images comportant des images prises l'une après l'autre avec de courts intervalles de temps ;
un affichage de l'image stockée dans le premier moyen (101) de stockage sur le moyen (110) d'affichage ;
sur demande d'un utilisateur, un affichage sur le moyen (110) d'affichage d'images à partir de la première pluralité et/ou de la deuxième pluralité d'images ;
une fourniture à l'utilisateur de la possibilité de choisir une image dans la première ou dans la deuxième pluralité d'images devant être stockées dans le premier moyen (101) de stockage ; et
si l'utilisateur choisit une image à partir de la première ou de la deuxième pluralité d'images devant être stockées dans le premier moyen (101) de stockage, un stockage de l'image choisie dans le premier moyen (101) de stockage.
